Europäisches Patentamt

(19) European Patent Office

Office européen des brevets

(11) Numéro de publication: **0 216 878**

**B1**

(12) **FASCICULE DE BREVET EUROPEEN**

(45) Date de publication du fascicule du brevet: **26.09.90**

(21) Numéro de dépôt: **86902297.0**

(22) Date de dépôt: **18.04.86**

(86) Numéro de dépôt international:
**PCT/CH86/00051**

(87) Numéro de publication internationale:
**WO 86/06525 06.11.86 Gazette 86/24**

(51) Int. Cl.⁵: **G 06 K 9/62**, G 07 C 11/00

(54) **PROCEDE POUR COMPARER UNE ECRITURE MANUSCRITE AVEC UNE ECRITURE DE REFERENCE.**

(30) Priorité: **26.04.85 CH 1788/85**

(43) Date de publication de la demande:
**08.04.87 Bulletin 87/15**

(45) Mention de la délivrance du brevet:
**26.09.90 Bulletin 90/39**

(84) Etats contractants désignés:
**AT BE CH DE FR GB IT LI NL SE**

(56) Documents cités:
**GB-A-2 062 323**
**US-A-3 699 517**
**US-A-4 040 012**
**US-A-4 128 829**

**IBM Journal of Research & Development,volume 21,no.3,mai 1977,New York,(US)N.M.Herbst et al.:"Automatic signature verification based on accelerometry",pages 245-253,voir page 248,colonne de gauche,dernier alinéa - colonne de droite**

(73) Titulaire: **DYNAMAD S.A.R.L.**
**La Châtelaine Rue René Cassin**
**F-74240 Gaillard (FR)**

(72) Inventeur: **BECHET, Louis**
**"Les Gouilles"**
**Bonnatrait F-74140 Douvaine (FR)**

(74) Mandataire: **Dousse, Blasco Blasco DOUSSE et Jean-Paul SAVOYE et al**
**7, route de Drize**
**CH-1227 Carouge-Genève (CH)**

EP 0 216 878 B1

**Description**

La présente invention se rapport à un procédé pour comparer une écriture manuscrite avec une écriture de référence, par mesure de signaux caractéristiques des composantes de vitesse selon l'abscisse $V_x$ et l'ordonnée $V_y$ d'un système de coordonnées rectangulaires, enregistrés au cours du tracé des écritures respectives, selon lequel on divise chaque signal de vitesse $V_x$, $V_y$ de l'écriture à comparer et de l'écriture de référence en différents segments de temps distincts du mouvement ayant engendré l'écriture, on fait coordonner la position de chaque segment du mouvement de l'écriture à comparer avec le segment correspondant du mouvement de l'écriture de référence, on détermine un facteur de correction fonction de la variation de temps entre chaque segment du mouvement de l'écriture et le segment correspondant du mouvement de l'écriture de référence.

Les signaux enregistrés lors de la mesure de la vitesse d'une écriture manuscrite sont aussi caractéristiques de la personne que ne le sont les empreintes digitales ou le timbre et l'intonation de la voix. On peut également comparer la vitesse du tracé de caractères distincts avec un catalogue relatif au tracé de l'ensemble des caractères alphanumériques. Une telle comparaison peut constituer un mode d'identification de caractères sans utiliser la reconnaissance d'image. Un tel mode d'identification pourrait être utilisé pour remplacer le clavier comme moyen de communication avec un ordinateur.

Si l'on se reporte plus particulièrement à la signature, on sait qu'avec les moyens de paiement ou de retrait d'argent utilisant des cartes de crédit, le problème de son authentification lié à l'identification du porteur de la carte de crédit s'avère de plus en plus nécessaire pour la sécurité des utilisateurs de ces moyens de paiement aussi bien que pour les organismes bancaires.

Actuellement, l'authentification est effectuée par la comparaison graphique sur la base d'une pièce d'identité. Il s'avère cependant que certaines signatures sont relativement faciles à copier et qu'il existe des faussaires suffisamment habiles pour imiter le graphisme de façon à créer l'illusion d'une signature authentique. Il existe d'autres domaines évidemment où on peut envisager d'identifier une personne sur la base de sa signature.

Il a déjà été proposé diverses solutions pour permettre d'authentifier des signatures sur une autre base que le graphisme, de manière à effectuer une comparaison par les moyens qu'offre l'informatique. C'est ainsi que l'on a déjà eu l'idée d'exploiter les accélérations ou la pression d'un stylo au moment du tracé de la signature. Il s'avère cependant que ces signaux sont entachés par des bruits de mesure, de sorte qu'ils sont difficiles à exploiter avec une sécurité suffisante. Il ne faut pas oublier en effet que le problème de l'authentification de la signature présente deux risques tout aussi gênants l'un que l'autre, celui d'accepter comme authentique une fausse signature et celui de refuser une signature bel et bien authentique.

C'est la raison pour laquelle on a déjà proposé de mesure la vitesse du stylo, qui n'est pas entachée de bruit, comme décrit dans le US—A—4 363 023 et le US—A—4 397 033. L'authentification est basée sur la comparaison des courbes des composantes de vitesses enregistrées selon deux axes d'un système de coordonnées rectangulaires, et caractéristiques de deux signatures dont l'une constitue la référence alors que l'autre est la signature à authentifier en fonction de la référence.

Comme on l'a dit ci-dessus, le résultat de cette comparaison doit être fait avec un degré de certitude élevé ausis bien pour écarter les fausses signatures que pour reconnaître les vraies, ce qui rend le traitement delicat. En outre, si on veut arriver à une solution sûre et utilisable dans des domaines tels que celui des cartes de crédit, il est évidemment nécessaire que le traitement des signaux de vitesse enregistrés n'excède pas une durée de 20 à 30 secondes étant donné qu'il n'est pas réaliste d'envisager une durée sensiblement plus longue pour être acceptée par les utilisateurs. Cette exigence, compte tenu du la double sécurité d'authentification demandée rend la solution du problème encore plus ardue.

Si la signature est incontestablement caractéristique de l'individu et en particulier les fluctuations de vitesse, il faut cependant remarquer qu'il ne s'agit pas de caractéristiques immuables. Au contraire, on peut même dire qu'une même personne ne signe jamais deux fois de façon identique, ceci aussi bien sur le plan du graphisme que sur celui de la vitesse. Les courbes caractéristiques des signaux de vitesse ne sont donc pas superposables en raison des modifications intervenant essentiellement dans l'échelle de temps.

Ce problème est connu, et on a déjà proposé d'y apporter une solution, comme ceci est décrit dans le US—A—4.040.012. Selon la solution proposée par ce document, le signal mesuré qui est un signal de pression en fonction du temps, est découpé en au moins deux segments. Chacun de ces segments est déplacé par rapport au segment correspondant du signal de référence d'arrière en avant par pas successifs, en établissant une corrélation maximum. Dans un deuxième temps, et en mettant les segments en face l'un de l'autre selon la corrélation maximum établie précédemment, on modifie l'échelle de temps du segment et donc sa vitesse par pas successifs et on établit une deuxième corrélation. Ensuite, on combine les corrélations maximum pour chaque segment pour donner une valeur de corrélation maximum et on la compare avec une valeur de référence pour s'assurer qu'elle ne s'écarte pas de cette valeur de référence au-delà d'un seuil déterminé.

Dans la solution proposée par ce document, la technique de corrélation qui est utilisée pour le centrage et la mise à l'échelle des segments de signaux mesurés par rapport aux segments de signaux de la référence, sert également comme mode de reconnaissance de la signature. Dans la pratique, ce mode de reconnaissance équivaut à comparer la forme des signes graphiques, dans la mesure où il utilise des critères relatifs à la forme générale des courbes. Ces critères sont les mêmes que ceux qui permettraient à

EP 0 216 878 B1

un observateur humain d'effectuer le centrage et la mise à l'échelle des courbes par une comparaison visuelle de ces courbes.

L'utilisation de ces mêmes critères pour la reconnaissance de la signature à partir d'une référence, revient donc à comparer la forme générale des courbes, ce qui est insuffisant. En effet, deux personnes qui produisent la même signature engendrent des courbes de vitesse qui ont la même forme générale, c'est-à-dire qui présentent le même nombre de pics possédant des formes semblables. Par conséquent, une signature contrefaite peut donner un facteur de corrélation aussi élevé que la signature authentique.

C'est la raison pour laquelle le critère de corrélation, utile pour effectuer le centrage et ajuster l'échelle de temps des différents segments de courbes par rapport aux segments correspondants de la référence, n'est pas adapté à l'opération de reconnaissance elle-même, dans la mesure où, selon ce critère, on peut facilement considérer une signature contrefaite comme étant authentique.

Le US—A—3.699.517 se rapport à un appareil pour authentifier une signature comportant un transducteur pour mesurer la position et la durée de contact d'un instrument d'écriture, d'où l'on dérive les composantes de vitesse et d'accélération. On calcule ensuite les moments des paramètres et les différences de ces moments par rapport à une référence et on compte également le nombre de contacts entre l'instrument et la surface d'écriture et on mesure la durée de ces contacts. L'inconvénient d'un tel mode d'authentification provient de sa complexité qui augmente le temps nécessaire pour obtenir une réponse quant à l'authenticité de la signature examinée. Par ailleurs, la multiplication du nombre de paramètres comparés n'augmente pas proportionnellement la sécurité.

Le US—A—4.128.829 mesure les accélérations en x et y ainsi que la pression de l'instrument sur la surface d'écriture. Ces signaux sont ensuite découpés en segments et comparés par la méthode de corrélation avec des segments correspondants de la signature de référence. Cette méthode revient de nouveau à comparer la forme générale des courbes. Or comme on l'a déjà mentionné, cette comparaison de courbes par corrélation donne des résultats insuffisants.

Le but de la présente invention est précisément d'apporter une solution qui permette de résoudre l'ensemble des problèmes susmentionnés avec un degré de sécurité élevé. Dans le cas de la signature, cette solution permet d'éliminer les fausses signatures, même ressemblantes sur le plan du graphisme, aussi bien qu'à authentifier avec un pourcentage élevé les vraies signatures même dans le cas de signatures dont la dymamique est peu marquée et ceci dans un temps extrémement bref.

A cet effet, la présente invention à pour objets un procédé pour comparer une écriture manuscrite avec une écriture de référence selon la revendication 1, ainsi qu'une utilisation de ce procédé.

La mise au point du procédé selon l'invention découle du fruit d'une observation basée sur l'analyse systématique du déroulement des processus liés à l'écriture manuscrite et en particulier à la signature, chez différents individus. Cette observation à permis de mettre en évidence certaines constantes ainsi que la forme prise par les paramètres instables, dans le déroulement normale de ces processus, de sorte qu'il est possible de dégager certaines règles qui permettant d'accroître simultanément la sécurité et la rapidité du processus de comparaison de courbes qui ne sont cependant pas identiques.

De ces observations, plus particulièrement relatives à la signature, il apparait que le mécanisme qui préside à sa génération se décompose en plusieurs segments dont le nombre est variable d'une signature à l'autre, mais constant pour une structure déterminée. Entre ces segments, on constate l'apparition de signaux extraordinaires qui surviennent accidentellement. A l'intérieur de chaque segment, on peut par contre constater parfois l'absence d'une partie du signal. On relève deux types d'altérations affectant chaque segment, une variation de sa position par rapport aux segments voisins, et une variation de sa durée. Le sens et la grandeur des altérations affectant un segment sont indépendants de ceux qui affectent les segments voisins.

A la suite de ces observations, on a envisagé de procéder à une normalisation de chaque segment par rapport aux segments correspondants de la signature de référence, qui consiste à faire coïncider les segments de la signature à authentifier avec ceux de la signature de référence et à modifier leurs échelles de temps respectives en fonction de ceux de la référence.

On a pu établir que la durée des segments des signatures de l'ensemble des individus se situe entre 500 et 700 ms. Les essais ont montré qu'en adoptant une durée correspondant à la moyenne soit 600 ms, les résultats obtenus sont satisfaisants.

Il s'avère que le traitement des courbes de vitesse par segments de 600 ms et la normalisation de ces segments permet de réduire à moins de 30 secondes la durée du traitement avec une fiabilité élevée. L'opération de comparaison proprement dite sur la base des segments normalisés étant simplifiée à l'extrême par la normalisation préalable.

L'acquisition des signaux de vitesse selon deux axes de coordonnées rectangulaires est obtenue par induction électromagnétique à l'aide d'un stylu muni d'un aimant permanent à champ magnétique axial induisant des tensions variables proportionnelles aux composantes de vitesse selon ces deux axes de coordonnées rectangulaires, dans deux portions de bobines qui se croisent à angle droit sous le plan de la surface d'écriture. Un tel dispositif est décrit en détail par le US—A—4 363 023 et par le US—A—4 397 033 et l'on peut se reporter à ces documents si on désire connaître plus en détail les moyens utilisés pour obtenir les courbes de vitesse, ces moyens n'étant pas décrits ici du fait qu'ils sortent du cadre de l'invention et ne sont pas nécessaires à sa compréhension.

L'authentification de la signature selon le procédé de comparison objet de l'invention nécessite

3

l'enregistrement des courbes de vitesse caractéristiques de la signature de la personne concernée dans une mémoire d'ordinateur, dans la mémoire d'une carte dite: "carte à mémoire" qui comporte une mémoire à semi-conducteur, sur une piste magnétique ou sur tout autre support approprié. En pratique et pour que cette référence ne soit représentative que d'un spécimen unique de signature qui ne sera jamais reproduit de façon identique, on établit une moyenne caractéristique de plusieurs signatures, qui est plus représentative des constantes de la signature et qui permet d'éliminer certains signaux exceptionnels ou de compenser l'absence accidentelle de certaines portions de segments qui peuvent se produire, comme on l'a signalé précédemment. L'établissement de cette référence à partir de plusieurs signatures, généralement en nombre inférieur à cinq, est obtenu en divisant ces signatures en séquences de 600 ms et en procédant à leur normalisation mutuelle comme décrit précédemment, après quoi on établit deux courbes des vitesses $V_x$ respectivement $V_y$ correspondant à la moyenne de l'ensemble des courbes.

Le dessin annexé illustre, schématiquement et à titre d'exemple, une forme d'exécution de la mise en oeuvre du procédé objet de l'invention.

La fig. 1 est un schéma bloc général du procédé.

Les figs. 2 à 4 sont des tableaux de marche du traitement des signaux.

Les figs. 5 et 6 illustrent des diagrammes d'enregistrement de vitesses de signatures.

La fig. 7 est le tableau de marche d'une variante du traitement des figs 2 à 4.

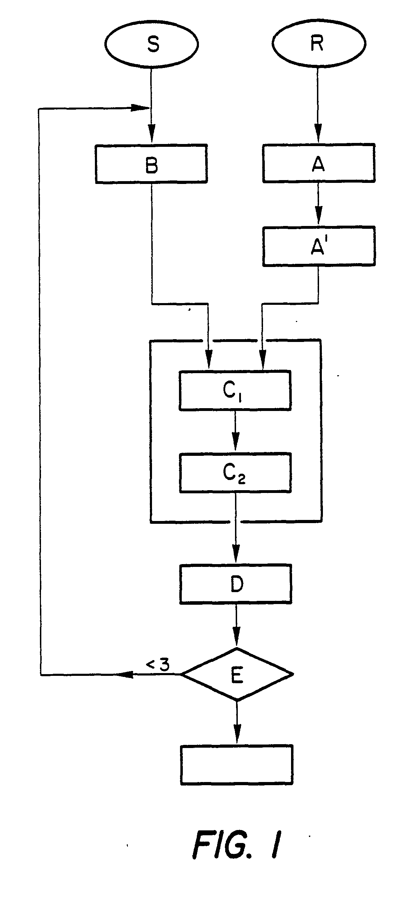

La Fig. 1 représente le schéma de déroulement du procédé de comparaison d'une signature avec une signature de référence selon l'invention. Le rectangle A représente la lecture de la référence R utilisée en vue de la comparaison, le rectangle B représente l'acquisition de la signature S sous la forme de deux courbes de vitesse $V_x$ et $V_y$. Le rectangle A' correspond à un traitement préalable éventuel de la référence qui sort du cadre de la présente invention. Dans le rectangle $C_1$, les courbes de vitesse de la signature acquises par le rectangle B, divisées en segments, sont décalées dans le temps comme décrit précédemment par rapport aux segments correspondants de la référence lue par le rectangle A. Dans le rectangle $C_2$ les longueurs des segments son égalisées. Les segments des signaux ainsi normalisés dans les rectangles $C_1$ et $C_2$ sont ensuite comparés aux segments da la référence dans le rectangle D. Ensuite les résultats de cette comparaison sont transmis au losange de décision E qui détermine si les résultats de la comparaison sont acceptables ou non. Les critères d'acceptation sont établis statistiquement pour que l'écart entre la référence et la signature comparée reste dans des limites de sécurité acceptables tout en étant suffisamment flexible pour accepter les variations normales entre deux signatures authentiques. L'ajustement de cet écart dépend donc de l'échantillon des signatures utilisé et de sa représentativité.

On examinera maintenant plus en détal les opérations relatives à la normalisation des segments, ces opérations se déroulant par la succession de la recherche du décalage de chaque segment des signaux de vitesse de la signature à authentifier par rapport au segment correspondant de la référence.

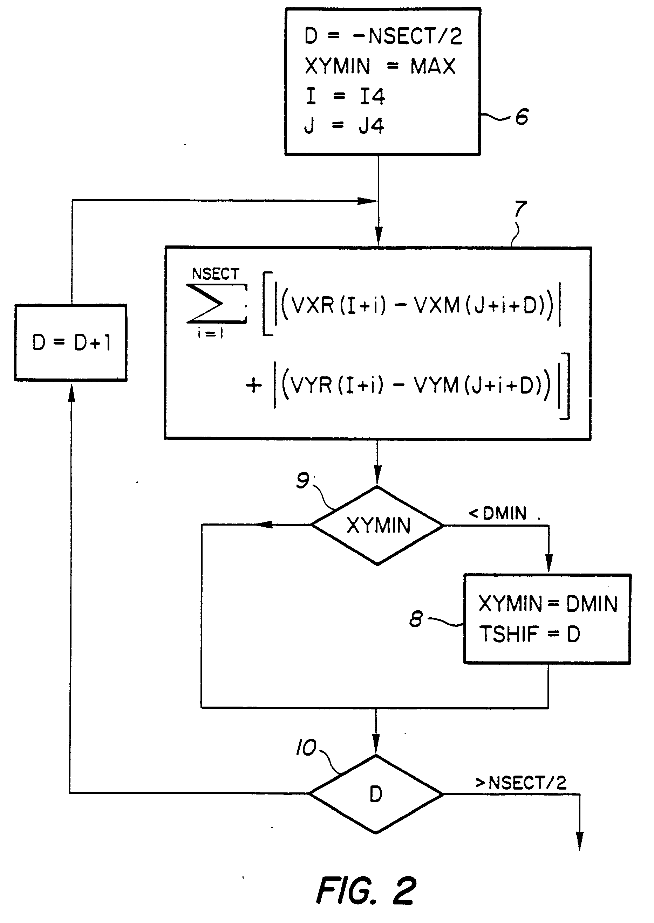

La recherche du décalage proprement dit sera décrite en se référant plus spécialement au tableau de marche de la fig. 2. Dans ce tableau, I4 correspond à l'indice du début du segment considéré du signal de référence, J4 correspond à l'indice du début du segment correspondant du signal de mesure de la signature à comparer, D désigne le décalage de temps et NSECT désigne le nombre de pas égaux dans l'échelle de temps par lequel chaque segment des signaux de référence et de mesure est divisé pour former les échantillons analysés.

Pour effectuer la comparaison, on décale tout d'abord le segment du signal de mesure par rapport au signal de référence dans le sens négatif d'un nombre de pas égal à NSECT/2 et ensuite on déplace le segment du signal de mesure d'un pas en sens positif jusqu'à un nombre de pas lui aussi égal à NSECT/2.

A chaque pas de décalage du signal de mesure, on calcule dans le rectangle 7, une grandeur DMIN qui correspond à la somme des deux termes indiqués dans ce rectangle 7, dans lesquels VXR et VYR sont les composantes de vitesse selon les axes x respectivement y du signal de référence et VXM et VYM sont les composantes de vitesse correspondantes du signal de mesure.

On commence par introduire dans une mémoire représentée par un rectangle 8 une valeur XYMIN=MAX. On compare dans le losange 9 si la valeur DMIN calculée dans le rectangle 7 est inférieure 6 XYMIN mémorisée dans le rectangle 8. Si la réponse est affirmative, la branche de droite du losange 9 envoie la valeur DMIN dans la mémoire 8 avec la valeur correspondante de D pour remplacer la valeur précédente et la branche de gauche de ce losange 9 envoie au losange comparateur 10 l'information d'avancer d'un pas. Si la valeur affichée dans ce losange comparateur 10, D<NSECT/2 la branche de gauche qui forme une boucle avec l'entrée du rectangle 7 fait avancer le signal de mesure d'un pas D=D+1 et la même opération que celle qui a été décrite recommence jusqu'à ce que le losange comparateur 10 affiche une valeur D>NSECT/2. A ce moment, c'est la branche de droite de ce losange qui est activée et le décalage du signal de mesure s'arrête.

Une fois cette opération terminée, le signal correspondant au segment mesuré est positionné par rapport au signal du segment correspondant de la référence en adoptant le décalage D mémorisé dans le rectangle 8 pour lequel on a obtenu pa différence DMIN la plus faible.

On passe alors à la seconde étape du processus de normalisation qui consiste à déterminer quel est le facteur temps par lequel il faudra corriger le segment du signal mesuré pour que la somme des différences d'amplitudes des composantes X et Y de vitesse du segment du signal de mesure soit minimum comparée à la somme correspondante du segment analogue du signal de référence.

A cet effet, on effectue la comparaison des sommes susmentionnées en appliquant à chaque

4

## EP 0 216 878 B1

échantillon du signal de mesure un facteur temps qui croît par incréments du facteur de multiplication de 0,05 dans une plage allant de 0,75 à 1,25 fois la durée du segment du signal de référence.

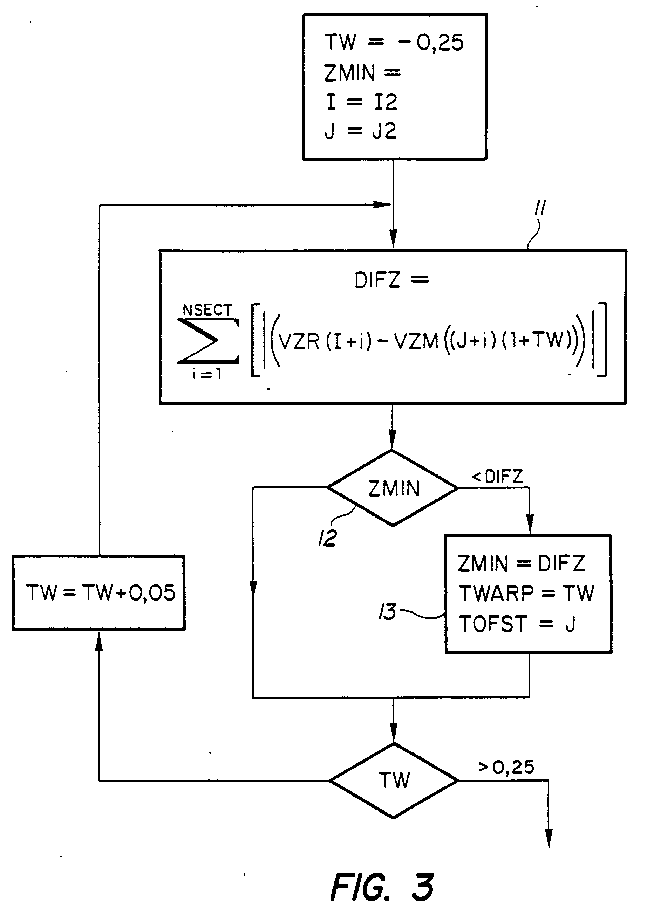

En se reportant au tableau de marche de la figure 3, I2 correspond à l'indice du début du segment du signal de référence, J2 à l'indice du début du segment du signal de mesure, TW au facteur temps et NSECT au nombre d'incréments du facteur de multiplication de 0,05 dans la plage allant de 0,25 à +0,25 fois la durée du segment du signal de référence.

Pour chaque valeur du facteur de multiplication TW, on calcule dans le rectangle 11 du tableau de marche de la fig. 3 une grandeur DIFZ qui est la somme sur toute la séquence des signaux, des différences des amplitudes des composantes de vitesse de la référence VZR et des amplitudes des composantes de vitesse du signal de mesure VZM.

On compare dans le losange de décision 12 le résultat de chaque opération issue des différences obtenues pour chaque facteur temps avec la valeur précédente mise dans la mémoire 13. Si cette comparaison montre que la valeur calculée dans le rectangle 11 est plus faible que celle de la mémoire 13 on substitue dans cette mémoire la nouvelle valeur à l'ancienne, avec la valeur correspondante du facteur temps TWARP=TW. Une fois que l'opération du rectangle 11 a été effectuée pour toute la gamme des valeurs du facteur de multiplication TW allant de $-0,25$ à $+0,25$ fois la durée normalisée du segment, la mémoire 13 conserve donc l'écart le plus faible avec le facteur temps TWARP=TW correspondant. En même temps la fin du processus de comparison dans la plage de facteurs temps indiquée détermine le début du segment suivant de signaux de vitesse mesurée J=TOFST qui constitue une variable intermédiaire.

Une fois que chaque segment des signaux de vitesse mesurés de la signature est affecté d'une valeur de décalage D et d'un facteur de multiplication de son échelle de temps TW, chaque segment des signaux de vitesse est normalisé à l'aide de ces deux facteurs de correction.

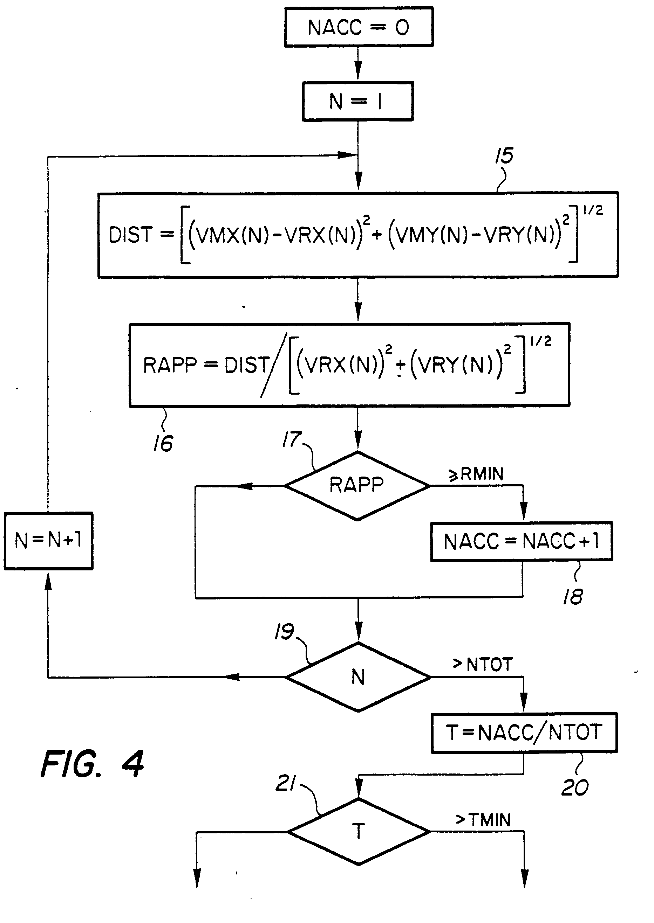

La comparaison proprement dite des segments respectifs des signaux de vitesse de la signature mesurée avec celles de la référence ne s'effectue donc que sur la base des segments des signaux de vitesse mesurés normalisés. Le processus de comparison sera expliqué en se référant au tableau de marche de la fig. 4.

Ce processus de comparison est basé sur le calcul de la distance point à point, effectué dans un plan défini par deux axes Ox et Oy qui portent les composantes de vitesse VX et VY des signaux mesurés et normalisés.

Dans ce plan, la signature de référence est représentée par une succession de point $R_1$, $R_2$,...$R_n$ de la courbe des signaux de vitesse, dont les coordonnées sont les composantes de vitesse VX et VY.

Le point $R_1$ de cette courbe par exemple, a pour coordonnées les valeurs des vitesses VRX et VRY à l'instant $t_1$. L'ensemble des points $R_1$, $R_2$...$R_n$ représente l'hodographe des signaux de la référence.

Dans ce même plan, on trace l'hodographe des signaux de vitesse de la signature à comparer à ceux de la référence, cet hodographe étant une succession de points $M_1$, $M_2$,..., $M_n$ représentatifs des composantes de vitesse VMX et VMY aux instants $t_1$, $t_2$,...$t_n$ respectivement, qui ont pour coordonnées les valeurs des vitesses VMX et VMY aux instants $T_1$, $T_2$,...$T_N$ respectivement.

La distance point à point correspond à la distance euclidienne qui sépare un point $M_1$ des signaux de vitesse de la signature d'un point $R_1$ des signaux de vitesse de la référence servant d'élément de comparison, les deux points étant considérés au même instant $t_1$.

Par exemple, pour un point $R_1$, la distance avec le point $M_1$, correspondant au même instant $t_1$ et égale à la longueur du vecteur

$$\overrightarrow{M_1 \ R_1}$$

qui est calculée par le rectangle 15 à l'aide de la formule contenue dans ce rectangle. Ces distances sont calculées pour chaque point correspondant aux instants $t_1$, $t_2$,...$t_n$.

Une fois que la distance est calculée pour un point, le résultat obtenu est soumis à un test d'acceptation qui comporte deux phases.

La première de ces phases est exécutée dans le rectangle 16 et consiste à effectuer le rapport entre la distance calculée dans le rectangle 15 et le module de la vitesse du signal de référence considéré au même instant. Ce rapport s'exprime comme suit:

$$RAPP = \frac{M_1 \ R_1}{O_1 \ R_1}$$

Dans la seconde phase du test d'acceptation, le rapport issu du rectangle 16 est transféré à un losange de décision 17 qui décide d'accepter le rapport relatif au point considéré de l'hodographe des signaux de vitesse de la signature lorsque ce rapport est inférieur à un seuil d'acceptation prédéterminé. Par exemple, si on fixe le seuil d'acceptation à 0.5, un point à l'instant $t_1$ de l'hodographe des signaux de vitesse de la signature est accepté, si la distance entre ce point et le point au même instant $t_1$ de l'hodographe des signaux de vitesse de la référence est inférieure ou égale à la moitié de la distance entre l'origine et ce point à l'instant $t_1$ de l'hodographe des signaux de vitesse de la référence.

5

Chaque point inférieur au seuil d'acceptation est totalisé dans le rectangle 18. Le losange 19, lui, effectue la totalisation de tous les points pour lesquels un rapport a été calculé par le rectangle 16. Tant que le total de ces points acceptés ou non n'a pas atteint une valeur prédéterminée, le losange envoie par sa branche gauche l'ordre de passer au point suivant de l'hodographe des signaux de vitesse de la signature à comparer et la même suite d'opérations est répetée pour chacun des autres points de l'odogramme jusqu'à ce que le nombre de points atteigne le nombre prédéterminé affiché par le losange 19.

A ce moment, c'est la branche droite de ce losange qui est activée et le rectangle 20 effectue le calcul du taux de points acceptés NACC par rapport au nombre total de points NTOT. Lorsque ce taux est supérieur à un seuil prédéterminée affiché dans le losange 21, la branche droite de ce losange est activée et la signature est acceptée, dans le cas contraire c'est la branche gauche qui est activée et la signature est refusée. L'acceptation de la signature peut se traduire de différentes manières suivant l'usage que l'on désire faire de ce mode de reconnaissance, le but général étant de s'assurer que la personne inconnue qui a signé et dont on a comparé la signature à celle d'une personne conneu corresponde effectivement à cette personne connue, en utilisant un moyen de reconnaissance spécifique de la personne et non pas par un élément de codage attribué arbitrairement à cette personne et qui peut être volé. Dans le cas de la présente invention, même si la référence est portée par une piste magnétique ou par une mémoire morte en possession de la personne elle-même et donc susceptible d'être volée, aucune autre personne ne pourra s'en servir dans la mesure où la dynamique de la signature utilisée ici comme élément de comparaison ne peut pas être acquise par un tiers, même si celui-ci arrive à contrefaire le graphisme de la signature.

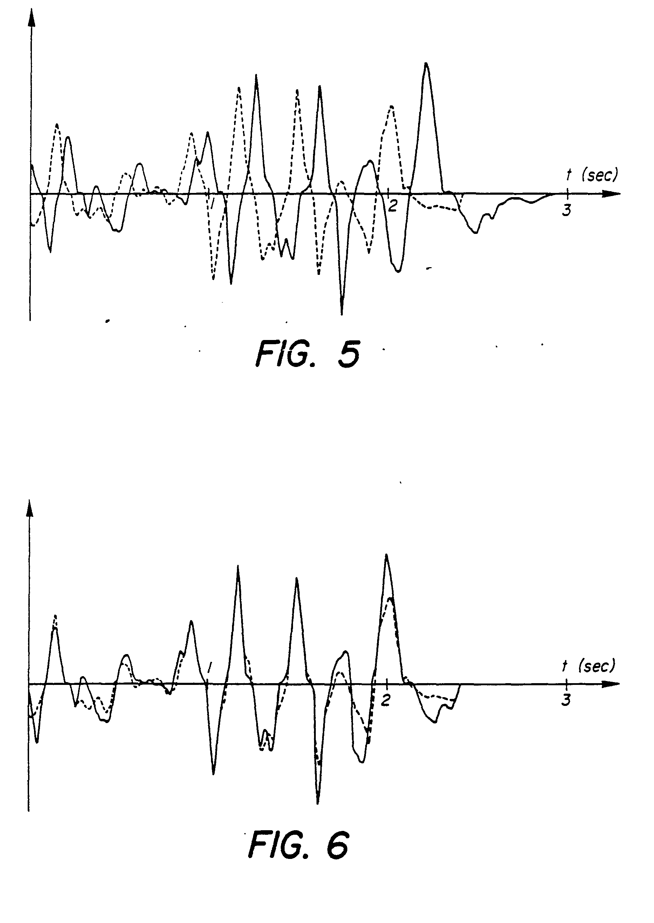

Les diagrammes des figs 5 et 6 illustrent l'intérêt du procédé objet de l'invention. La fig. 5 montre les diagrammes de vitesse de deux signatures, l'une en traits interrompus constituant la référence et l'autre la signature à comparer. Ces deux signatures sont exécutées par la même personne. Or on constate qu'en raison des décalages entre les signaux comparables, la corrélation entre les points des deux courbes est extrêment réduite et ne s'élève qu'à 6%. Il est évidemment impossible sur une telle base de fixer un taux d'acceptation si la corrélation entre les points de deux courbes sensées correspondre est déjà aussi faible que 6%.

La fig. 6 illustre ces deux mêmes courbes, la référence étant en traits interrompus et la courbe de vitesse de la signature à mesurer étant en trait continu, cette dernière étant traitée préalablement conformément à ce qui a été décrit précédemment. Dans ce cas, le taux de corrélation entre les points des deux courbes est 72%.

On a constaté qu'en pratique il est possible sans risque de fixer le seuil du taux de corrélation minimum à 40%. Il a été permis de constater que même avec deux signatures ressemblant à s'y méprendre l'une à l'autre mais dont l'une est fausse, le taux de corrélation ne dépasse pas 20 à 30%. Par contre, il est rare et accidentel qu'une personne exécute une signature dont le taux de corrélation est inférieur à 40%. Le fait que le procédé selon l'invention permette de déceler aisément que deux signatures, pourtant graphologiquement parfaitement ressemblantes, ne sont pas exécutées par la même personne, montre que le procédé selon l'invention confère une sécurité infiniment supérieure à celle de la simple comparaison graphologique.

Comme on l'a précisé précédemment, le procédé qui a été décrit en détail ci-dessus en relation avec la comparaison des courbes de vitesse de deux signatures dont l'une constitue une référence peut être appliqué à la comparaison d'autres courbes caractéristiques de l'écriture manuscrite.

Dans ce cas, il sera plus fréquent de comparer une courbe à un cataloque de courbes dont chacune correspond à une lettre voire à une syllabe. Si l'on prend à titre d'exemple l'identification d'une série de caractères par leur courbe de vitesse, il s'agit de comparer selon le procédé décrit précédemment la courbe enregistrée avec chacune des courbes du catalogue. On déduira de cette comparaison que la courbe enregistrée correspond au caractère du catalogue dont la courbe a le taux de ressemblance le plus élevé avec la courbe enregistrée.

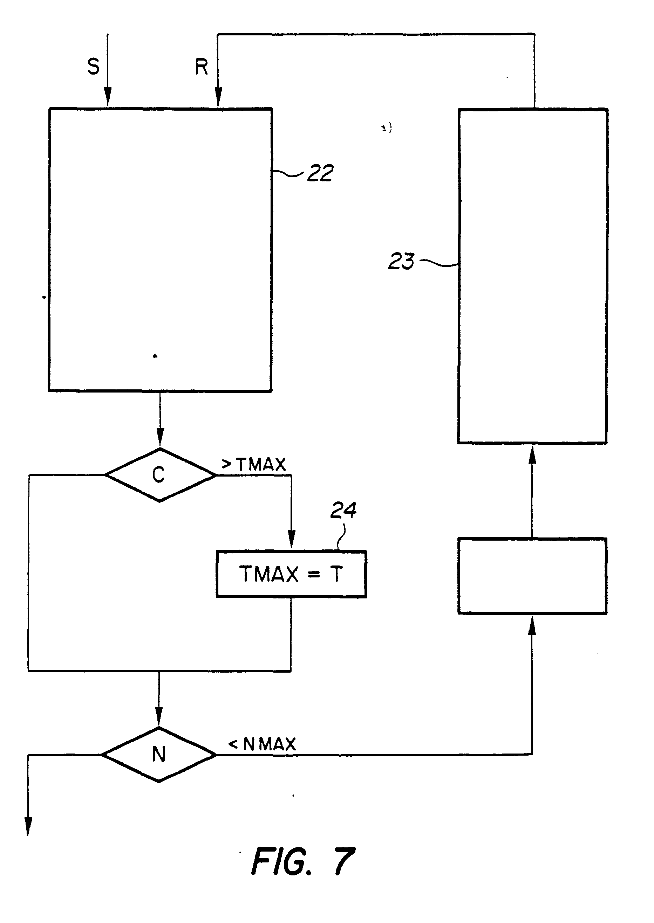

Le schéma général de la fig. 7 illustre le mode de fonctionnement du procédé objet de l'invention lorsque la comparaison est faite non pas vis-à-vis d'une courbe comme dans le cas de l'authentification de la signature, mais par rapport à un catalogue. Les opérations dites de normalisation de la courbe à comparer par rapport à la courbe de référence sont identiques à celles décrites précédemment de sorte qu'elles ne seront pas décrites à nouveau ici. L'ensemble de ce traitement est exécuté dans le rectangle 22 comprenant deux entrées S et R respectivement pour la courbe à comparer et pour la courbe de référence. Cette seconde entrée R est reliée au catalogue de courbes 23 qui délivre successivement à cette entrée les courbes répertoriées.

A la sortie D de ce rectangle 22 on a donc une valeur correspondant au taux de ressemblance obtenu à la suite de la comparaison entre les deux courbes. Ce taux, lorsqu'il s'agit de la première courbe comparée correspond au maximum obtenu et le losange de comparaison C aura automatiquement sa branche de droite activée pour fournir au rectangle 24 la valeur T du taux qui correspond à TMAX. Lorsque le résultat du taux de ressemblance résultat de la comparaison entre la courbe enregistrée et la deuxième courbe du catalogue 23 est obtenu, le losange C compare cette valeur au taux gardé en mémoire dans le rectangle 24. Si cette valeur est plus grande, elle remplace celle qui a été précédemment stockée et le losange de comparaison N est activé, dans le cas contraire ce losange de comparaison N est activé par la branche de gauche du losange de comparaison C. Le losange N détermine si le nombre de comparaisons effectuées sur la même courbe mesurée est égal ou plus petit que le nombre de courbes du catalogue 23. Si ce

EP 0 216 878 B1

nombre est plus petit, c'est la branche de droite du losange N qui est activée et fait appel à la courbe suivant du catalogue 23. Lorsque ce nombre est égal an nombre de courbes du catalogue, la branche de gauche du losange N indique la courbe reconnue qui correspond à la courbe dont le taux de ressemblance est maximum et qui est stockée dans le rectangle 24.

**Revendications**

1. Procédé pour comparer une écriture manuscrite avec une écriture de référence, par mesure de signaux caractéristiques des composantes de vitesse selon l'abcisse $V_x$ et l'ordonnée $V_y$ d'un système de coordonnées rectangulaires, enregistrés au cours du tracé des écritures respectives, selon lequel on divise chaque signal de vitesse $V_x$, $V_y$ de l'écriture à comparer et de l'écriture de référence en différents segments de temps distincts du mouvement ayant engendré l'écriture, on fait coordonner la position de chaque segment du mouvement de l'écriture à comparer avec le segment correspondant du mouvement de l'écriture de référence, on détermine un facteur de correction fonction de la variation de temps entre chaque segment du mouvement de l'écriture de la segment correspondant du mouvement de l'écriture de référence, caractérisé par le fait qu'on trace dans un plan défini par deux axes OX et OY les hodographes des signaux des composantes de vitesses de l'écriture à comparer (VMX, VMY), respectivement de l'écriture de référence (VRX, VRY), on choisit aux instants $t_1$ à $t_n$ les points $R_1$ à $R_n$ respectivement $M_1$ à $M_n$ des hodographes de l'écriture de référence et de l'écriture à comparer et on calcule la distance euclidienne qui sépare les points respectifs des deux hodographes qui correspond à la longueur du vecteur

$$\overrightarrow{M_1 \ R_1}$$

pour $t_1$ c'est-à-dire

$$\|M_1 \ R_1\| = [(VMX(t_1) - VRX(t_1))^2 + (VMY(t_1) - VRY(t_1))^2]^{1/2}$$

on applique au résultat un test d'acceptation local correspondant au rapport

$$\frac{M_1 \ R_1}{O \ R_1}$$

et on accepte le point $M_1$ si ce rapport est inférieur à un seuil d'acceptation prédéterminé et on répète cette opération jusqu'au point $M_n$ à l'instant $t_n$.

2. Utilisation du procédé selon la revendication 1, pour comparer une signature à une signature de référence.

**Patentansprüche**

1. Verfahren zum Vergleichen einer Handschrift mit einer Referenzschrift mittels im Laufe der jeweiligen Schriftaufzeichnung registrierter charakteristischer Signale von Geschwindigkeitsbestandteilen entlang der Abszisse $V_x$ und der Ordinate $V_y$ eines rechtwinkligen Koordinatensystems, wobei jedes Geschwindigkeitssignal $V_x$, $V_y$ der zu vergleichenden Schrift und der Referenzschrift in der Bewegung der niedergelegten Schrift entsprechende unterschiedliche Zeitsegmente aufgeteilt wird, wobei die Position jedes Bewegungssegments der zu vergleichenden Schrift mit dem entsprechenden Bewegungssegment der Referenzschrift koordiniert wird, wobei ein Korrekturfaktor als Funktion der Zeitvariation zwischen jedem Bewegungssegment der Schrift und dem entsprechenden Bewegungssegment der Referenzschrift bestimmt wird, dadurch gekennzeichnet, daß in einer durch zwei Achsen OX und OY bestimmten Fläche die Hodographen der Signale der Geschwindigkeitsbestandteile der zu vergleichenden Schrift (VMX, VMY), beziehungsweise der Referenzschrift (VRX, VRY) aufzeichnet werden, daß zu Zeitpunkten $t_1$ bis $t_n$ die Punke $R_1$ bis $R_n$, beziehungsweise $M_1$ bis $M_n$ der Hodographen der Referenzschrift und der zu vergleichenden Schrift ausgewählt werden und der euklidische Abstand zwischen den entsprechenden Punkten der beiden Hodographen, welcher der Länge des Vektors

$$\overrightarrow{M_1 \ R_1}$$

für $t_1$ entspricht, wie folgt berechnet wird

$$\|M_1 \ R_1\| = [(VMX(t_1) - VRX(t_1))^2 + (VMY(t_1) - VRY(t_1))^2]^{1/2}$$

7

daß auf das Ergebnis ein lokaler Akzeptanztest angewandt wird gemäß folgendem Verhältnis

$$\frac{M_1 \ R_1}{O \ R_1}$$

und daß der Punkt $M_1$ akzeptiert wird, wenn dieses Verhältnis geringer ist als eine vorbestimmte Akzeptanzschwelle, und daß diese Vorgehensweise bis zu einem Punkt $M_n$ zu einem Zeitpunkt $t_n$ wiederholt wird.

2. Verwendung des Verfahrens nach Anspruch 1 zum Vergleichen einer Unterschrift mit einer Referenzunterschrift.

**Claims**

1. A method of comparing a handwriting with a reference writing by the measurement of signals $V_x$ and $V_y$ characteristic of the speed components along the abscissa and ordinate respectively of a rectangular-coordinates system, such signals being recorded during the tracing of the respective writings, each speed signal $V_x$, $V_y$ of the writing to be compared and of the reference writing being divided into various discrete time segments of the movement which produced the writing, the position of each such segment of the writing to be compared being coordinated with the corresponding segment of the movement of the reference writing, a correction factor being determined which is dependent upon the time variation between each movement segment of the writing to be compared and the corresponding movement segment of the reference writing, characterised in that the hodographs of the signals of the speed components (VMX, VMY) of the writing to be compared and of the reference writing (VRX, VRY) are traced in a plane bounded by two axes OX, OY respectively, positions $R_1$ to $R_n$ and $M_1$ to $M_n$ respectively of the reference writing hodographs and the hodographs of the writing to be compared, respectively, are chosen at times $t_1$ to $t_n$, and the euclidian distance between the respective positions of the two hodographs which corresponds to the length of the vector

$$\overrightarrow{M_1 \ R_1}$$

for $t_1$, i.e.:

$$\|M_1 \ R_1\| = [(VMX(t_1) - VRX(t_1))^2 + (VMY(t_1) - VRY(t_1))^2]^{1/2}$$

is calculated, a local acceptance test corresponding to the ratio:

$$\frac{M_1 \ R_1}{O_1 \ R_1}$$

is applied to the result, the position $M_1$ is accepted if the ratio is below a predetermined acceptance threshold and the operation is repeated up to the position $M_n$ for instant $t_n$.

2. Use of the process according to Claim 1 to compare a signature with a reference signature.

FIG. 1

$$D = -NSECT/2$$
$$XYMIN = MAX$$
$$I = I4$$
$$J = J4$$

6

7

$$D = D+1$$

$$\sum_{i=1}^{NSECT} \left[ \left| (VXR(I+i) - VXM(J+i+D)) \right| + \left| (VYR(I+i) - VYM(J+i+D)) \right| \right]$$

9

XYMIN    < DMIN

8    XYMIN = DMIN
     TSHIF = D

10

D    > NSECT/2

*FIG. 2*

$$DIFZ = \sum_{i=1}^{NSECT} \left[ \left| \left( VZR(I+i) - VZM((J+i)(1+TW)) \right) \right| \right]$$

FIG. 3

$$NACC = 0$$

$$N = 1$$

$$DIST = \left[\left(VMX(N) - VRX(N)\right)^2 + \left(VMY(N) - VRY(N)\right)^2\right]^{1/2}$$

15

$$RAPP = DIST \bigg/ \left[\left(VRX(N)\right)^2 + \left(VRY(N)\right)^2\right]^{1/2}$$

16

17 RAPP ≥RMIN

N = N+1

NACC = NACC+1

18

19 N >NTOT

T = NACC/NTOT

20

21 T >TMIN

FIG. 4

FIG. 5

FIG. 6

FIG. 7